# FASCICULE DE BREVET EUROPEEN

(11) **EP 3 061 048 B1**
(45) Date de publication et mention de la délivrance du brevet: **10.10.2018**
(21) Numéro de dépôt: 14856216.8
(22) Date de dépôt: 23.10.2014
(51) Int. Cl.: G06Q 10/08, B62D 53/00, B62D 47/00, B60P 3/00

(54) **SYSTÈME DE GESTION DE FLUX LOGISTIQUES D'UNE USINE D'ÉLECTROLYSE, ALUMINERIE COMPRENANT CE SYSTÈME, VÉHICULE POUR LA MISE EN OEUVRE DE CE SYSTÈME ET PROCÉDÉ D'IMPLANTATION DE CE SYSTÈME DANS UNE USINE D'ÉLECTROLYSE PRÉEXISTANTE**
SYSTEM ZUR VERWALTUNG VON LOGISTIKDATENFLÜSSEN IN EINEM ELEKTROLYSESYSTEM, ALUMINIUMSCHMELZER MIT DIESEM SYSTEM, FAHRZEUG ZUR VERWENDUNG DES SYSTEMS UND VERFAHREN ZUM INTEGRIEREN DIESES SYSTEMS IN EIN BEREITS BESTEHENDES ELEKTROLYSESYSTEM
SYSTEM FOR MANAGING LOGISTICS FLOWS IN AN ELECTROLYSIS PLANT, ALUMINIUM SMELTER COMPRISING THE SYSTEM, VEHICLE FOR USING THE SYSTEM, AND METHOD FOR INTRODUCING SAID SYSTEM INTO A PRE-EXISTING ELECTROLYSIS PLANT

(30) Priorité: 25.10.2013 FR 1302483
(43) Date de publication de la demande: 31.08.2016
(73) Titulaire: Rio Tinto Alcan International Limited, Montréal, QC H3B 0E3 (CA)
(72) Inventeur: PRODENT, Stéphane, F-38490 Saint-Ondras (FR); RUGET, Gabriel, F-38760 Varces-Allieres-et-Risset (FR); BAYARD, Christophe, F-38500 Voiron (FR)
(74) Mandataire: Malcoiffe, Julien
(86) Numéro de dépôt international: PCT/IB2014/002223
(87) Numéro de publication internationale: WO 2015/059557

(56) Documents cités:
- DE-A1- 4 221 882
- FR-A1- 2 714 394
- FR-A1- 2 874 934
- FR-A1- 2 953 223

## Description

La présente invention concerne un système de gestion de flux logistiques d'une usine d'électrolyse, une aluminerie comprenant ce système, un véhicule de transport pour la mise en oeuvre de ce système, ainsi qu'un procédé d'implantation de ce système dans une usine d'électrolyse préexistante.

Traditionnellement, une usine d'électrolyse comme une aluminerie comprend un bâtiment abritant un hall d'électrolyse, dans lequel sont alignées des centaines de cuves d'électrolyse destinées à la production d'aluminium par électrolyse selon le procédé de Hall-Héroult.

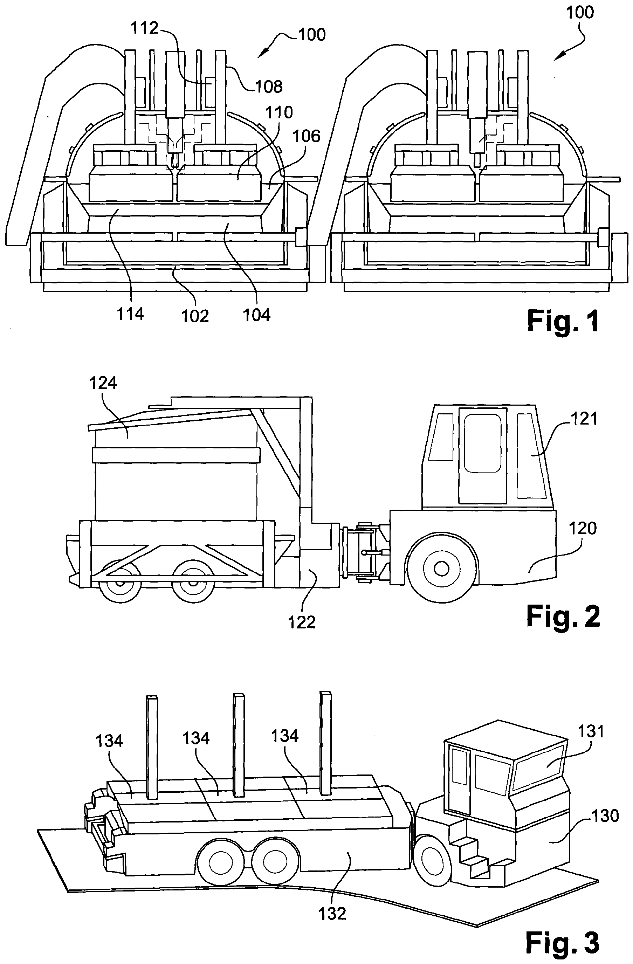

A cet effet, les cuves 100 d'électrolyse, comme celles représentées sur la figure 1, comprennent classiquement un caisson 102 en acier à l'intérieur duquel est agencé un revêtement en matériaux réfractaires, une cathode 104 en matériau carboné, traversée par des conducteurs cathodiques destinés à collecter le courant d'électrolyse à la cathode 104 pour le conduire jusqu'à des sorties cathodiques traversant le fond ou les côtés du caisson 102, des conducteurs d'acheminement s'étendant sensiblement horizontalement jusqu'à la cuve suivante depuis les sorties cathodiques, un bain 106 électrolytique dans lequel est dissout l'alumine, au moins un ensemble anodique comportant au moins une anode 110 plongée dans ce bain électrolytique et une tige 108 anodique scellée dans l'anode 110, un cadre 112 anodique auquel est suspendu l'ensemble anodique via la tige anodique, et des conducteurs de montée du courant d'électrolyse, s'étendant de bas en haut, reliés aux conducteurs d'acheminement de la cuve 100 d'électrolyse précédente pour acheminer le courant d'électrolyse depuis les sorties cathodiques jusqu'au cadre anodique et à l'ensemble anodique et l'anode de la cuve suivante. Les anodes sont plus particulièrement de type anodes précuites avec des blocs carbonés précuits, c'est-à-dire cuits avant introduction dans la cuve d'électrolyse.

Au cours de la réaction d'électrolyse se forme une nappe 114 d'aluminium liquide au fond de la cuve d'électrolyse. L'aluminium liquide ainsi produit est régulièrement collecté dans des récipients de coulée, également appelés poches de coulée. L'aluminium liquide ainsi collecté est ensuite transporté jusqu'à une fonderie pour y être traité.

Les récipients de coulée vides sont transportés de la fonderie vers le hall d'électrolyse. L'aluminium de plusieurs cuves d'électrolyse est classiquement collecté dans un même récipient de coulée. Lorsque celui-ci est plein, il est transporté du hall d'électrolyse vers la fonderie.

Le transport des récipients de coulée vides ou pleins est traditionnellement assuré par un premier type de véhicule de transport. Ce premier type de véhicule comprend classiquement, comme cela est visible sur la figure 2, un engin 120 avant de traction avec cabine 121 de pilotage, auquel est attelée une remorque 122 articulée capable de supporter un récipient 124 de coulée plein de l'aluminium liquide collecté dans plusieurs cuves d'électrolyse.

Par ailleurs, toujours au cours de la réaction d'électrolyse, les anodes sont progressivement consommées. Il est donc nécessaire de prévoir une évacuation des ensembles anodiques usés et un approvisionnement régulier des cuves d'électrolyse en ensembles anodiques neufs destinés à remplacer les ensembles anodiques usés.

Les ensembles anodiques neufs sont généralement entreposés dans une zone de stockage. Les ensembles anodiques usés sont entreposés dans une zone de traitement dans laquelle ils peuvent être revalorisés.

Le transport des ensembles anodiques est assuré par un deuxième type de véhicules de transport, visible sur la figure 3, comprenant classiquement un engin 130 avant de traction avec cabine 131 de pilotage, et une remorque 132 attelée et articulée à l'engin avant de traction. Pour minimiser le nombre de trajets, et ainsi réduire les coûts de transport par ensemble anodique, la remorque est dimensionnée pour transporter une pluralité d'ensembles 134 anodiques. Selon l'exemple de la figure 3, la remorque supporte ainsi trois ensembles anodiques à la fois.

L'utilisation d'un chariot à fourche en porte-à-faux et contrepoids est également connue des publications de brevet FR2714394 et DE4221882 pour transporter une pluralité d'ensembles anodiques contenus dans des réceptacles distinct d'un caisson de transport.

Les récipients de coulée, pleins, et les lots d'ensembles anodiques destinés à être transportés au cours d'un même trajet, constituent des charges lourdes, pouvant peser jusqu'à dix tonnes

Par conséquent, les véhicules de transport actuels sont conçus et dimensionnés pour supporter et transporter ces charges lourdes.

Les véhicules de transport actuels, de récipients de coulée ou d'ensembles anodiques, présentent donc, avec ou sans charge, une masse importante, un encombrement important, et une manoeuvrabilité relativement faible.

Les infrastructures, à l'intérieur des bâtiments comme à l'extérieur des bâtiments, sont conçues pour supporter ces véhicules, et dimensionnées pour permettre de les manoeuvrer.

Il en résulte des voies de circulation larges, de largeur généralement supérieure à huit mètres pour permettre le croisement de deux véhicules ou le demi-tour d'un véhicule. Les virages présentent un rayon de courbure important.

De plus, les bâtiments à l'intérieur desquels doivent circuler les véhicules sont conséquemment de grandes dimensions. Cela a des conséquences sur les équipements situés à l'intérieur des bâtiments. Par exemple, les ponts roulants s'étendant dans la largeur des bâtiments sont surdimensionnés, compte-tenu de leur portée plus grande.

A l'intérieur du hall d'électrolyse, une voie de circulation, ou allée d'exploitation, doit être maintenue à un « potentiel flottant » compte-tenu de la présence des cuves d'électrolyse situées à proximité et parcourues par un courant d'électrolyse pouvant atteindre plusieurs centaines de milliers d'Ampères. Cette voie de circulation est traditionnellement suspendue et isolée électriquement du reste du bâtiment. Compte-tenu de la masse des véhicules de transport et de leur charge, cela implique une ingénierie importante de construction.

On retiendra donc que les solutions actuelles de transport de charges dans une usine d'électrolyse impliquent des coûts d'infrastructures et de génie civil importants, et nécessitent un espace également important dont il ne peut être tiré profit par exemple pour augmenter les capacités de production de l'usine d'électrolyse.

Par ailleurs, on aura compris que les véhicules de transport sont spécialisés dans le transport d'un seul et même type de charge, soit récipients de coulée, soit ensembles anodiques. Un troisième type de véhicules, comme un chariot à fourche en porte-à-faux et contrepoids, peut être prévu pour le transport d'outillages dans le hall d'électrolyse. Cette pluralité de véhicules distincts implique des coûts de maintenance importants. Cela peut aussi impacter la productivité, car il n'est pas possible d'affecter au transport d'une charge un véhicule, momentanément inutilisé, spécialisé dans le transport d'un type de charge distinct.

Par ailleurs, on précise que les véhicules de transport actuels sont équipés d'une motorisation thermique adaptée pour tracter des charges lourdes. Outre les effets préjudiciables en termes d'émissions de dioxyde de carbone ou d'autres gaz polluants à l'intérieur des bâtiments traversés, cela nécessite de prévoir un approvisionnement coûteux et contraignant en énergie fossile. De plus, les frais de maintenance sont élevés compte-tenu de la présence nécessaire d'une transmission.

En termes de productivité, on notera que le taux de service des véhicules actuels, pilotés par des opérateurs, est intégralement dépendant de la disponibilité de ces opérateurs.

De plus, les véhicules de transport actuels comprennent des moyens de bridage destinés à limiter leur vitesse maximale de déplacement. Cela contribue avantageusement à augmenter la sécurité. Cependant, la productivité en est affectée dans la mesure où les temps de trajet sont augmentés sur des portions présentant des risques d'accident faibles voire nuls pour lesquelles les véhicules pourraient donc rouler à une vitesse supérieure à la vitesse maximale obtenue par bridage.

Enfin, toujours en termes de productivité, on notera que le transport de plusieurs ensembles anodiques lors d'un même trajet conduit parfois à déplacer des ensembles anodiques neufs non immédiatement nécessaires aux besoins de fonctionnement des cuves d'électrolyse. Ces ensembles anodiques neufs sont donc déposés à proximité des cuves d'électrolyse en vue de leur utilisation prochaine. Ce dépôt peut occasionner une gêne temporaire entre le moment où l'ensemble anodique neuf est déposé et celui où il est effectivement utilisé pour remplacer un ensemble anodique usé.

Aussi, la présente invention vise à pallier tout ou partie de ces inconvénients en proposant un système de gestion de flux logistiques d'une usine d'électrolyse, une aluminerie comprenant ce système, un véhicule de transport pour la mise en oeuvre de ce système, ainsi qu'un procédé d'implantation de ce système dans une usine d'électrolyse préexistante.

A cet effet, la présente invention a pour objet un système de gestion de flux logistiques d'une usine d'électrolyse comprenant :
- des ensembles anodiques neufs et des ensembles anodiques usés,
- une zone de stockage, destinée au stockage des ensembles anodiques neufs,
- une zone de traitement, destinée au traitement des ensembles anodiques usés,
- une zone de production, comprenant une pluralité de cuves d'électrolyse destinées à la production de métal liquide par électrolyse, et
- une flotte de véhicules de transport destinés au transport des ensembles anodiques neufs de la zone de stockage vers la zone de production et des ensembles anodiques usés de la zone de production vers la zone de traitement,
caractérisé en ce que les véhicules de transport sont conçus pour pouvoir transporter uniquement un seul ensemble anodique à la fois.

Ainsi, le système de gestion selon l'invention repose sur une individualisation des flux logistiques, à contre-courant de la tendance actuelle visant à multiplier le nombre de charges transportées à chaque trajet pour limiter le nombre de trajets donc les coûts logistiques.

L'individualisation des flux logistiques permet avantageusement de réduire les dimensions des véhicules, car la charge totale à transporter à chaque trajet est moins lourde.

Cette diminution des dimensions des véhicules permet de réduire la taille des voies de circulation, de réduire les coûts d'infrastructure et d'isolation des allées à potentiel flottant, et de réduire également les espaces extérieurs entre les bâtiments.

La diminution des dimensions de véhicules permet aussi d'accroître la visibilité. En effet, le personnel présent dans l'usine peut voir au-delà des véhicules. Cela offre davantage de sécurité.

La diminution des dimensions des véhicules de transport contribue aussi à réduire leur masse. Les performances requises pour la motorisation des véhicules peuvent être revues à la baisse, si bien que des économies peuvent être réalisées.

L'individualisation des flux logistiques permet aussi de satisfaire exactement aux besoins de la zone de production en ensembles anodiques neufs ou à l'évacuation des ensembles anodiques usés après retrait hors de la cuve d'électrolyse. Autrement dit, l'individualisation des flux logistiques évite le dépôt dans la zone de production d'ensembles anodiques neufs non immédiatement nécessaires dans la zone de production ou d'ensembles anodiques usés en attente d'évacuation et pouvant de ce fait occasionner une gêne temporaire et une pollution gazeuse.

Ainsi, le système de gestion selon l'invention offre la possibilité de faire des économies substantielles en termes de place et d'infrastructures.

Le traitement des ensembles anodiques usés peut consister en leur recyclage ou en leur stockage en vue de leur évacuation.

Selon un mode de réalisation, les véhicules de transport comprennent un ou plusieurs moteurs électriques et un ensemble de supercondensateurs destiné à alimenter le ou les moteurs électriques, et le système de gestion comprend au moins une zone de rechargement équipée de moyens de rechargement destinés à recharger l'ensemble de supercondensateurs lorsque l'un des véhicules de transport est situé dans la zone de rechargement.

L'utilisation d'une motorisation électrique évite le recours à des énergies fossiles, réputées coûteuses et polluantes.

L'utilisation d'une motorisation électrique permet également des économies de maintenance, car les véhicules de transport peuvent être dépourvus de transmission entre le moteur et les roues. Or les systèmes de transmission, particulièrement sollicités sur les véhicules de transport à motorisation thermique, nécessitent une maintenance fréquente.

L'utilisation d'un ou plusieurs supercondensateurs permet en outre de diminuer la masse du véhicule de transport, comparativement par exemple à l'utilisation de l'équivalent en batteries sensiblement plus lourd. Cette réduction de masse contribue aux économies réalisées du fait du dimensionnement moindre des infrastructures et du gain de place obtenu, et à une consommation d'énergie moindre par le véhicule de transport.

L'utilisation d'un ou plusieurs supercondensateurs permet également d'augmenter la durée de vie des véhicules puisque les supercondensateurs présentent une durée de vie sensiblement plus importante, environ mille fois plus importante, que celle des batteries.

Les supercondensateurs de l'ensemble de supercondensateurs peuvent avantageusement être uniformément répartis sur le véhicule de transport. Autrement dit, les supercondensateurs peuvent s'étendre dans toutes les parties du véhicule de transport. Les supercondensateurs ne sont pas localisés dans une partie spécifique du véhicule de transport. Cela permet d'équilibrer les masses du véhicule de transport. En particulier, les supercondensateurs de l'ensemble de supercondensateurs peuvent être agencés dans la portion centrale et dans les deux portions latérales du véhicule de transport.

De manière avantageuse, les moyens de rechargement correspondent à des moyens de rechargement à distance.

Avantageusement, ladite au moins une zone de rechargement est agencée sur un itinéraire emprunté par les véhicules de transport lorsqu'ils transportent un ensemble anodique de la zone de stockage vers la zone de production et/ou sur un itinéraire emprunté par les véhicules de transport lorsqu'ils transportent un ensemble anodique de la zone de production vers la zone de traitement.

De plus la zone de rechargement peut être équipée d'un système de recharge qui ne nécessite aucun contact physique avec le véhicule de transport pour le recharger. Ce dernier se positionne simplement quelques dizaines de secondes au-dessus du système de recharge.

Ainsi, les supercondensateurs sont alimentés pendant le travail des véhicules de transport. Cela évite l'immobilisation de véhicules de transport hors des flux de travail des véhicules. Il en résulte un gain de temps améliorant la productivité.

Selon un mode de réalisation, le système de gestion comprend également une zone de fonderie, destinée à la solidification du métal liquide, et une flotte de véhicules de transport destinés à transporter des récipients de coulée vides depuis la zone de fonderie vers la zone de production et des récipients de coulée contenant un métal liquide depuis la zone de production vers la zone de fonderie, dans lequel les récipients de coulée sont dimensionnés pour pouvoir contenir uniquement le métal liquide coulé d'une unique cuve d'électrolyse parmi les cuves d'électrolyse de la zone de production lorsque le cycle de coulée présente une durée d1 de l'ordre de trente heures, et dans lequel les véhicules de transport sont dimensionnés pour pouvoir transporter uniquement un seul récipient de coulée à la fois.

Par cycle de coulée on entend cycle consistant à vider une cuve d'électrolyse d'une partie du métal liquide qu'elle contient. La durée du cycle de coulée correspond donc à la période de temps séparant deux collectes successives du métal liquide contenu dans une même cuve d'électrolyse.

Alternativement, le système de gestion comprend également une zone de fonderie, destinée à la solidification du métal liquide, et une flotte de véhicules de transport destinés à transporter des récipients de coulée vides depuis la zone de fonderie vers la zone de production et des récipients de coulée contenant un métal liquide depuis la zone production vers la zone de fonderie, dans lequel les récipients de coulée sont dimensionnés pour contenir le métal liquide coulé de plusieurs cuves d'électrolyse parmi les cuves d'électrolyse de la zone de production lorsque le cycle de coulée présente une durée d2 sensiblement inférieure à une durée d1 de l'ordre de trente heures, et dans lequel les véhicules de transport sont dimensionnés pour ne pouvoir transporter qu'un seul récipient de coulée à la fois.

Ainsi, à la différence de l'état de la technique, le récipient de coulée ne peut contenir qu'une quantité de métal correspondant à la coulée d'une seule cuve d'électrolyse lorsque le cycle de coulée a une durée classique d'une trentaine d'heures, ou correspondant à la coulée de plusieurs cuves d'électrolyse, par exemple de trois cuves d'électrolyse, lorsque le cycle de coulée a une durée courte, par exemple de l'ordre de dix heures.

Les dimensions et la masse du récipient de coulée, vide ou plein, sont moindres, si bien que les dimensions et la masse des véhicules de transport destinés à les transporter sont moindres que celles des véhicules de l'état de la technique. Il en résulte des économies sensibles en termes d'infrastructures intérieures et extérieures, une meilleure visibilité pour le personnel à pied, une plus grande flexibilité.

Selon un mode de réalisation, les véhicules de transport destinés au transport d'un seul ensemble anodique à la fois et les véhicules de transport destinés au transport d'un seul récipient de coulée à la fois sont sensiblement identiques, de sorte que les flottes de véhicules de transport se confondent en une seule et même flotte de véhicules de transport.

Ainsi, cela permet d'utiliser un seul type de véhicule de transport, standard, pour transporter les ensembles anodiques et les récipients de coulée. Cela permet de bénéficier d'économies d'échelle compte-tenu de plus grandes séries fabriquées.

Il en résulte aussi une plus grande flexibilité : les véhicules sont interchangeables. Un véhicule utilisé pour le transport d'un ensemble anodique peut être détaché pour le transport d'un récipient de coulée, et inversement, pour pallier un besoin urgent.

La standardisation des véhicules de transport permet aussi de réduire les coûts de maintenance, puisque les pièces des véhicules sont les mêmes.

A titre d'exemple, pour une usine d'électrolyse, du type aluminerie, comprenant 430 cuves d'électrolyses parcourues par un courant de l'ordre de 600 k Ampères, le système de gestion peut comprendre environ sept véhicules de transport affectés au transport unitaire d'ensembles anodiques et neuf véhicules de transport affectés au transport unitaire de récipients de coulée.

Selon un mode de réalisation, les véhicules de transport sont automatisés, et le système de gestion comprend une unité de supervision destinée à superviser le déplacement de chaque véhicule de transport, en vue d'acheminer des ensembles anodiques neufs de la zone de stockage vers la zone de production et des ensembles anodiques usés de la zone de production vers la zone de traitement, et le cas échéant en vue d'acheminer des récipients de coulée vides de la zone de fonderie vers la zone de production et des récipients de coulée contenant du métal liquide de la zone de production vers la zone de fonderie.

Les véhicules de transport automatisés peuvent fonctionner pendant les périodes de pause ou de changement de poste des opérateurs chauffeurs, ce qui permet d'accroître la productivité.

De plus, l'automatisation des véhicules de transport offre une plus grande traçabilité des charges transportées.

Avantageusement, les véhicules de transport comprennent des moyens de guidage automatique, destinés à permettre aux véhicules de transport de se déplacer de façon autonome dans l'usine d'électrolyse.

Cette caractéristique est avantageuse, car elle ne requiert pas une modification des infrastructures pour guider les véhicules de transport (par exemple par adjonction de bandes réfléchissantes au sol).

De plus, cette caractéristique permet aux véhicules de se guider efficacement indépendamment des conditions météorologiques, des conditions de luminosité (jour ou nuit), sans faire cas de poussières pouvant recouvrir le sol, aussi bien en intérieur qu'en extérieur.

Selon un mode de réalisation, le système de gestion comprend au moins une première zone de circulation et au moins une deuxième zone de circulation, dans lesquelles sont destinées à circuler les véhicules de transport, et des moyens de limitation de la vitesse des véhicules de transport associés aux moyens de guidage pour limiter automatiquement à une première vitesse V1 prédéterminée la vitesse des véhicules de transport circulant dans ladite au moins une première zone de circulation et à une deuxième vitesse V2 prédéterminée supérieure à la première vitesse V1 la vitesse des véhicules de transport circulant dans ladite au moins une deuxième zone de circulation.

Cela permet de satisfaire aux impératifs de sécurité en imposant aux véhicules de transport une vitesse limite adaptée aux risques que présente la zone dans laquelle ils circulent.

Cela permet également de s'assurer que les véhicules de transport circulent à la vitesse la plus élevée possible en fonction des risques et contraintes environnantes pour gagner en productivité.

Avantageusement, la première zone de circulation comprend une ou plusieurs zones parmi la zone de stockage, la zone de traitement, la zone de production et le cas échéant la zone de fonderie, et la deuxième zone de circulation est agencée en-dehors de la zone de stockage, de la zone de traitement, de la zone de production et le cas échéant de la zone de fonderie.

Ainsi, les véhicules de transport circulent à vitesse basse à l'intérieur des bâtiments et dans des zones à risques concentrant par exemple du personnel et du matériel, et circulent à vitesse plus élevée à l'extérieur des bâtiments et des zones à risques.

Selon un autre aspect de l'invention, celle-ci concerne une aluminerie comprenant une pluralité de cuves d'électrolyse rectangulaires destinées à la production d'aluminium et un système ayant les caractéristiques précitées, l'aluminerie comprenant en outre un ou plusieurs bâtiments, le ou l'un des bâtiments contenant ladite pluralité de cuves d'électrolyse, et au moins une allée de travail, agencée à l'intérieur dudit bâtiment contenant ladite pluralité de cuves d'électrolyse, l'allée de travail étant destinée à la circulation des véhicules de transport pour l'approvisionnement de ladite pluralité de cuves d'électrolyse en ensemble anodique neuf ou l'évacuation d'un ensemble anodique usé de ladite pluralité de cuves d'électrolyse, et dans laquelle ladite au moins une allée de travail présente une largeur inférieure ou égale au tiers, de préférence inférieure ou égale au quart, de la longueur desdites cuves d'électrolyse.

L'aluminerie peut comprendre plusieurs allées de travail, chacune agencée à l'intérieur dudit bâtiment contenant ladite pluralité de cuves d'électrolyse et chacune destinée à la circulation des véhicules de transport pour l'approvisionnement de ladite pluralité de cuves d'électrolyse en ensemble anodique neuf ou l'évacuation d'un ensemble anodique usé de ladite pluralité de cuves d'électrolyse, et chaque allée de travail peut présenter une largeur inférieure ou égale au tiers, de préférence inférieure ou égale au quart, de la longueur desdites cuves d'électrolyse.

Cette réduction sensible de la largeur de la ou des allées de travail permet des économies d'infrastructure. Les bâtiments sont moins grands, donc moins chers. Des économies connexes sont réalisées du fait de la réduction des dimensions des bâtiments. En effet, les bâtiments de service liés à la portée des machines de service d'électrolyse, sont moins grands donc moins chers, et les machines de service d'électrolyse sont moins lourdes du fait de la portée plus faible, donc également moins chères.

Selon un mode de réalisation, l'aluminerie comprend au moins une voie de circulation, destinée à la circulation des véhicules de transport à l'extérieur du ou des bâtiments de l'aluminerie, ladite au moins une voie de circulation présente une largeur inférieure à 6,5 m, et de préférence égale ou inférieure à 6 m.

L'aluminerie peut comprendre plusieurs voies de circulation destinées à la circulation des véhicules de transport à l'extérieur du ou des bâtiments de l'aluminerie, chaque voie de circulation présentant une largeur inférieure à 6,5 m, et de préférence égale ou inférieure à 6 m.

La réduction de la largeur de la ou des allées de travail et des voies de circulation permet aussi un gain d'espace substantiel. A titre d'exemple, une réduction de 30% de la largeur de la ou des allées de travail (et la réduction de la taille des bâtiments qui en résulte) et des voies de circulation permet une diminution de l'ordre de 20% de l'empreinte au sol de l'aluminerie. Cela s'opère sans réduction du nombre de cuves d'électrolyse, si bien que la quantité d'aluminium produit par mètre carré augmente sensiblement.

Selon un autre aspect de l'invention, les véhicules de transport comprennent des moyens de guidage automatique destinés à permettre leurs déplacements de façon autonome, lesdits véhicules de transport étant dimensionnés pour pouvoir transporter uniquement un seul ensemble anodique à la fois.

Ainsi, le véhicule de transport présente des dimensions relativement peu importantes comparées aux dimensions des véhicules de l'état de la technique.

Cette réduction de dimensions contribue à la diminution de masse du véhicule. Cette réduction de masse, comme expliqué précédemment, permet des économies sensibles en matière d'infrastructures.

De plus, la réduction des dimensions offre un surcroît de visibilité au-delà du véhicule, ce qui contribue à davantage de sécurité pour le personnel situé à proximité.

L'automatisation du véhicule avec des moyens de guidage automatiques permet de s'affranchir de l'utilisation d'un poste de pilotage destiné à accueillir un opérateur conducteur. Il en résulte des économies de masse et une visibilité accrue, ainsi qu'une réduction du coût du véhicule compte-tenu de l'absence d'équipements de confort et de sécurité nécessaires à une cabine de pilotage.

L'automatisation du véhicule offre également la possibilité d'assurer les transports de charges lourdes 24 heures sur 24 sans interruption, notamment sans interruptions liées à des périodes de pauses ou de changements de postes des opérateurs/chauffeurs conduisant les véhicules de l'état de la technique.

Selon un mode de réalisation, les véhicules comprennent des moyens de levage conçus pour soulever un unique ensemble anodique, et une pluralité de roues supportant les véhicules et agencées pour former un polygone à l'intérieur duquel s'étendent les moyens de levage.

Ainsi, la charge à transporter est centralisée, car située entre les roues supportant le véhicule. En d'autres termes, le véhicule est exempt de porte-à-faux et donc exempt de tout contrepoids susceptible d'augmenter sensiblement sa masse. La centralisation de la charge permet ainsi de réduire sensiblement la masse du véhicule.

Selon un mode de réalisation, les véhicules comprennent un unique ensemble anodique supporté par les moyens de levage et la surface du polygone formé par l'agencement des roues est sensiblement comprise entre 0,5 fois et 1,5 fois une surface projetée dans un plan sensiblement horizontal de l'ensemble anodique.

Selon un mode de réalisation, les véhicules comprennent un unique ensemble anodique supporté par les moyens de levage et les moyens de levage présentent une surface globale de support, sur laquelle est destinée à reposer l'unique ensemble anodique, la surface globale de support étant comprise entre 1 et 1,5 fois la surface projetée dans un plan sensiblement horizontal de l'ensemble anodique.

Un unique ensemble anodique peut ainsi être supporté par les moyens de levage et le véhicule.

Selon un mode de réalisation, les véhicules comprennent un unique ensemble anodique supporté par les moyens de levage et une surface projetée dans un plan sensiblement horizontal du véhicule de transport est sensiblement égale ou inférieur au triple, et de préférence égale ou inférieur au double d'une surface projetée dans un plan sensiblement horizontal de l'unique ensemble anodique.

Selon un mode de réalisation, les véhicules de transport comprennent un châssis en forme de U présentant une portion centrale et deux portions latérales sensiblement parallèles entre lesquelles s'étendent les moyens de levage, et les roues sont agencées sous les portions latérales et sous la portion centrale.

Selon un mode de réalisation, le véhicule de transport comprend un ou des moteurs électriques et un ensemble de supercondensateurs destiné à alimenter le ou les moteurs électriques.

Les supercondensateurs de l'ensemble de supercondensateurs peuvent avantageusement être uniformément répartis sur le véhicule de transport. Autrement dit, les supercondensateurs peuvent s'étendre dans toutes les parties du véhicule de transport. Les supercondensateurs ne sont pas localisés dans une partie spécifique du véhicule de transport. Cela permet d'équilibrer les masses du véhicule de transport. En particulier, les supercondensateurs de l'ensemble de supercondensateurs peuvent être agencés dans la portion centrale et dans les deux portions latérales du véhicule de transport.

Selon un mode de réalisation, les véhicules de transport comprennent des moyens de blindage destinés à protéger l'électronique embarquée contre les effets d'un champ magnétique.

Selon un mode de réalisation, les véhicules de transport comprennent un châssis et l'une au moins des roues du véhicule est mobile par rapport au châssis autour d'un axe de rotation sensiblement vertical.

Ainsi, le véhicule de transport présente un faible rayon de braquage. Cela augmente son agilité, notamment pour effectuer des demi-tours quasiment sur place.

Selon un mode de réalisation, les véhicules de transport comprennent des moyens d'arrimage conçus pour solidariser au véhicule de transport une palette autoportée dimensionnée pour supporter un unique récipient de coulée.

Ainsi, le véhicule de transport peut soit soulever un unique ensemble anodique, soit tracter un unique récipient de coulée. Autrement dit, le véhicule de transport est interchangeable, et offre donc une plus grande flexibilité d'utilisation.

Selon un mode de réalisation, les véhicules de transport comprennent des moyens de téléguidage, destinés à commander le déplacement du véhicule sur la base de signaux émis par des moyens de commande à distance destinés à permettre à un opérateur de prendre le contrôle à distance du véhicule de transport.

Ainsi, le véhicule de transport peut être télé-opéré. Cela permet à un utilisateur de prendre la main à distance sur le véhicule, par exemple pour lui faire exécuter un déplacement difficile de contournement d'obstacle. L'utilisateur peut s'appuyer pour téléguider le véhicule sur les images reçues d'une ou plusieurs caméras agencées sur le véhicule et le cas échéant dans l'usine d'électrolyse.

Selon un mode de réalisation, les véhicules de transport présentent une masse égale ou inférieure à cinq tonnes.

Selon un mode de réalisation avantageux, les véhicules de transport comprennent et supportent un unique ensemble anodique, et la masse du véhicule de transport est inférieure ou égale à la masse dudit ensemble anodique.

Selon un mode de réalisation, les véhicules présentent une hauteur maximale égale ou inférieure à 1200 mm.

Selon un mode de réalisation, les véhicules présentent une largeur maximale égale ou inférieure à 2500 mm.

Selon un mode de réalisation, les véhicules présentent une longueur maximale égale ou inférieure à 3800 mm.

Une telle masse et de telles dimensions ne sont pas évidentes, car la tendance consistant à transporter des ensembles anodiques simultanément par un même véhicule ou à transporter un récipient de coulée contenant le métal liquide collecté dans plusieurs cuves d'électrolyse par un même véhicule conduit nécessairement à envisager des véhicules présentant une masse et des dimensions importantes, adaptées au transport de telles charges (au total plus d'une trentaine de tonnes, véhicule plus charge).

Selon encore un autre aspect, la présente invention concerne un procédé d'implantation d'un système ayant les caractéristiques précitées dans une usine d'électrolyse comprenant une première flotte de véhicules de transport, dimensionnés pour transporter simultanément une pluralité d'ensembles anodiques, le procédé comprenant une étape de remplacement de ladite première flotte de véhicules de transport par une seconde flotte de véhicules de transport, ladite seconde flotte de véhicules de transport comprenant au moins un véhicule de transport dimensionné pour ne pouvoir transporter qu'un seul ensemble anodique à la fois.

Cela permet d'apporter un surcroît de flexibilité, de sécurité et de productivité à une usine d'électrolyse préexistante en la faisant bénéficier de flux de charges unitaires. Cela est rendu notamment réalisable par l'automatisation des véhicules qui ne nécessite pas des modifications d'infrastructure coûteuses.

Avantageusement, tous les véhicules de transport de la seconde flotte sont des véhicules de transport dimensionnés pour ne pouvoir transporter qu'un seul ensemble anodique à la fois.

Selon un mode de réalisation, le procédé comprend une étape de délimitation d'au moins une première zone de circulation et d'au moins une deuxième zone de circulation dans lesquelles sont destinés à circuler les véhicules de transport de ladite seconde flotte de véhicules de transport, une étape de détermination d'une première vitesse V1 prédéterminée correspondant à la vitesse maximale de déplacement autorisée des véhicules de transport de la seconde flotte dans ladite au moins une première zone de circulation, une étape de détermination d'une deuxième vitesse V2 prédéterminée supérieure à la première vitesse V1 et correspondant à la vitesse maximale de déplacement autorisée des véhicules de transport de la seconde flotte dans ladite au moins une deuxième zone de circulation, et une étape de mise en place de moyens de limitation de la vitesse des véhicules de transport destinés à limiter à la première vitesse V1 prédéterminée la vitesse des véhicules de transport circulant dans ladite au moins une première zone de circulation et à la deuxième vitesse V2 prédéterminée supérieure à la première vitesse V1 la vitesse des véhicules de transport circulant dans ladite au moins une deuxième zone de circulation.

Cela permet d'améliorer la productivité, en permettant une circulation à vitesse maximale dans les tronçons de circulation à faible risque de collision (portions de ligne droite en extérieur), compte-tenu du surcroît de sécurité apporté par l'automatisation des véhicules (pas de fatigue ou d'inattention du conducteur).

Selon un mode de réalisation, le procédé comprend une étape de séparation d'au moins une voie de circulation de l'usine d'électrolyse en au moins deux voies distinctes.

Ainsi, une voie préexistante, initialement exclusivement dédiée à la circulation des véhicules de transport de la première flotte capables de transporter plusieurs ensembles anodiques simultanément, peut être séparée en une voie destinée aux piétons, et une autre voie destinée aux véhicules de transport de la seconde flotte, de manière à définir, pour une même voie de circulation, un flux piétons et un flux véhicules. Cela est rendu possible du fait de la réduction des dimensions des véhicules de transport de la seconde flotte, réduction permise par l'individualisation de la charge transportée.

D'autres caractéristiques et avantages ressortiront clairement de la description ci-après d'un mode de réalisation de l'invention, donné à titre d'exemple non limitatif, en référence aux dessins annexés dans lesquels :
- la figure 1 montre une cuve d'électrolyse de l'état de la technique,
- la figure 2 montre un véhicule de transport de récipient de coulée selon l'état de la technique,
- la figure 3 montre un véhicule de transport d'ensembles anodiques selon l'état de la technique,
- la figure 4 est une représentation schématique d'un système de gestion selon un mode de réalisation de l'invention,
- les figures 5 et 6 sont des vues en perspective d'un véhicule de transport selon un mode de réalisation de l'invention, transportant respectivement un ensemble anodique et un récipient de coulée,
- les figures 7 et 8 sont des vues de dessus d'un véhicule de transport selon un mode de réalisation de l'invention, respectivement avec et sans un ensemble anodique,
- la figure 9 est une vue de derrière d'un véhicule de transport selon un mode de réalisation de l'invention, transportant un ensemble anodique,
- la figure 10 est une vue montrant une palette autoportée d'un véhicule de transport selon un mode de réalisation de l'invention,
- la figure 11 est une vue comparative de côté entre un véhicule de transport d'ensembles anodiques selon l'état de la technique et un véhicule de transport selon un mode de réalisation de l'invention,
- la figure 12 est une vue comparative de face entre un véhicule de transport d'un récipient de coulée selon l'état de la technique et un véhicule de transport selon un mode de réalisation de l'invention,
- la figure 13 montre une voie de circulation d'une usine d'électrolyse selon l'état de la technique,
- la figure 14 montre une voie de circulation d'une aluminerie selon un mode de réalisation de l'invention,
- la figure 15 montre par transparence un véhicule de transport selon un mode de réalisation de l'invention.

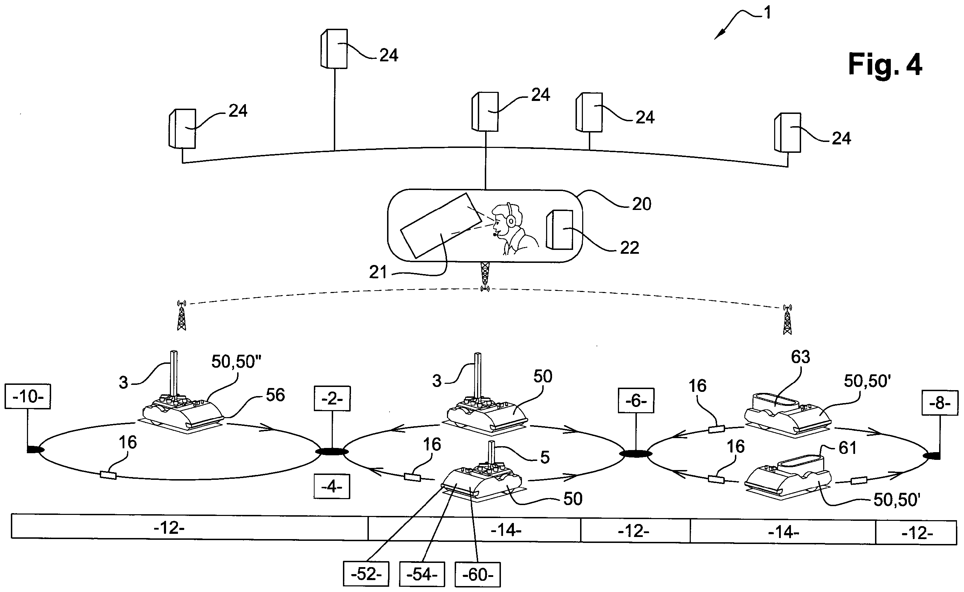

La figure 4 montre un système 1 de gestion de flux logistiques d'une usine d'électrolyse comprenant des ensembles 3 anodiques neufs et des ensembles 5 anodiques usés, selon un mode de réalisation de l'invention.

Le système 1 de gestion comprend une zone 2 de stockage, destinée au stockage d'ensembles anodiques neufs, une zone 4 de traitement, destinée au traitement d'ensembles anodiques usés, et une zone 6 de production, comprenant une pluralité de cuves d'électrolyse rectangulaires destinées à la production de métal liquide par électrolyse.

Le système 1 de gestion comprend aussi une flotte de véhicules 50 de transport destinés au transport des ensembles anodiques neufs de la zone 2 de stockage vers la zone 6 de production et des ensembles anodiques usés de la zone 6 de production vers la zone 4 de traitement.

Il est important de noter que les véhicules 50 de transport sont conçus pour transporter un unique ensemble anodique à la fois. En d'autres termes, il est impossible pour les véhicules 50 de transport de supporter plus d'un ensemble anodique. Les véhicules 50 de transport sont dimensionnés pour transporter un unique ensemble anodique à la fois.

Le système 1 de gestion selon l'invention repose donc sur une individualisation des flux logistiques, à contre-courant de la tendance actuelle visant à multiplier le nombre de charges transportées à chaque trajet pour limiter le nombre de trajets donc les coûts logistiques. Ainsi, le système 1 de gestion selon l'invention offre la possibilité de faire des économies substantielles en termes de place et d'infrastructures.

Le système 1 de gestion peut comprendre également une zone 8 de fonderie, destinée à la solidification du métal liquide, et une flotte de véhicules 50' de transport destinés à transporter des récipients 61 de coulée vide depuis la zone 8 de fonderie vers la zone 6 de production et des récipients 63 de coulée contenant un métal liquide depuis la zone 6 de production vers la zone 8 de fonderie. Les récipients de coulée sont dimensionnés pour soit ne pouvoir contenir que le métal liquide coulé d'une unique cuve d'électrolyse parmi les cuves d'électrolyse de la zone 6 de production lorsque le cycle de coulée présente une durée d1 de l'ordre de trente heures, soit pour contenir le métal liquide coulé de plusieurs cuves d'électrolyse parmi les cuves d'électrolyse de la zone 6 de production lorsque le cycle de coulée présente une durée d2 sensiblement inférieure à une durée d1. De plus, on notera que les véhicules 50' de transport sont dimensionnés pour ne pouvoir transporter qu'un seul récipient de coulée à la fois.

A titre de précision, la durée d1 correspond à une durée classique de cycle de coulée. La durée d2 peut être au moins deux fois inférieure à la durée d1, plus particulièrement au moins trois fois inférieure. Ainsi, la durée d2 peut être de l'ordre de dix heures.

Ainsi, à la différence de l'état de la technique, le récipient de coulée ne peut contenir qu'une quantité de métal correspondant à la coulée d'une seule cuve d'électrolyse lorsque le cycle de coulée a une durée classique d'une trentaine d'heures, ou correspondant à la coulée de plusieurs cuves d'électrolyse, par exemple trois cuves d'électrolyse, lorsque le cycle de coulée a une durée courte, par exemple environ dix heures, si bien que les dimensions et la masse du récipient de coulée, vide ou plein, sont moindres, et que les dimensions et la masse des véhicules 50' de transport destinés à les transporter sont moindres que celles des véhicules de l'état de la technique. Il en résulte des économies sensibles en termes d'infrastructures intérieures et extérieures, une meilleure visibilité pour le personnel à pied, une plus grande flexibilité.

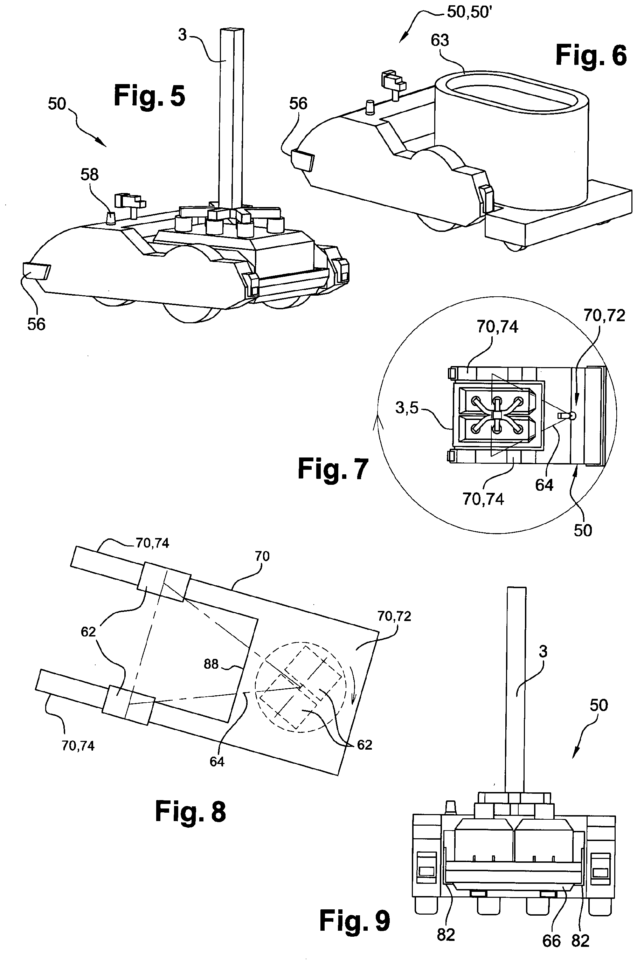

Comme on peut le voir sur les figures 5 et 6, les véhicules 50 de transport destinés au transport d'un seul ensemble anodique à la fois et les véhicules 50' de transport destinés au transport d'un seul récipient de coulée à la fois sont sensiblement identiques, de sorte que les flottes de véhicules de transport se confondent en une seule et même flotte de véhicules de transport. Les véhicules 50' de transport peuvent donc comprendre tout ou partie des caractéristiques des véhicules 50 de transport qui seront décrits plus en détails ci-après.

Le système 1 de gestion peut aussi comprendre une zone 10 de fabrication, destinée à la fabrication des ensembles 3 anodiques neufs, et des véhicules 50" de transport destinés au transport d'un unique ensemble 3 anodique neuf de la zone 10 de fabrication vers la zone 2 de stockage.

Ces véhicules 50" de transport peuvent avantageusement être sensiblement similaires aux véhicules 50 de transport destinés au transport des ensembles 3 anodiques neufs de la zone 2 de stockage vers la zone 6 de production et des ensembles 5 anodiques usés de la zone 6 de production vers la zone 4 de traitement. Les véhicules 50" de transport peuvent donc comprendre tout ou partie des caractéristiques des véhicules 50 de transport qui seront décrits plus en détails ci-après.

Ainsi, le système 1 de gestion peut comprendre un unique type de véhicule de transport destiné à transporter aussi bien soit un unique ensemble anodique soit un unique récipient de coulée de faibles contenance, par exemple dimensionné pour contenir un maximum de 6 tonnes de métal liquide.

Le système 1 de gestion peut donc comprendre un premier flux correspondant au transport d'ensembles 3 anodiques neufs depuis la zone 2 de stockage vers la zone 6 de production, un deuxième flux correspondant au transport d'ensembles 5 anodiques usés de la zone 6 de production vers la zone 4 de traitement, un troisième flux correspondant au transport de récipients 63 de coulée contenant du métal liquide de la zone 6 de production vers la zone 8 de fonderie, un quatrième flux correspondant au transport de récipients 61 de coulée vides de la zone 8 de fonderie vers la zone 6 de production, et un cinquième flux correspondant au transport d'ensembles 3 anodiques neufs de la zone 10 de fabrication vers la zone 2 de stockage.

Les véhicules 50, 50', 50" de transport sont destinés à circuler en intérieur 12 et/ou en extérieur 14.

La zone 2 de stockage, la zone 4 de traitement et le cas échéant la zone 10 de fabrication peuvent être agencées à l'intérieur d'un même bâtiment.

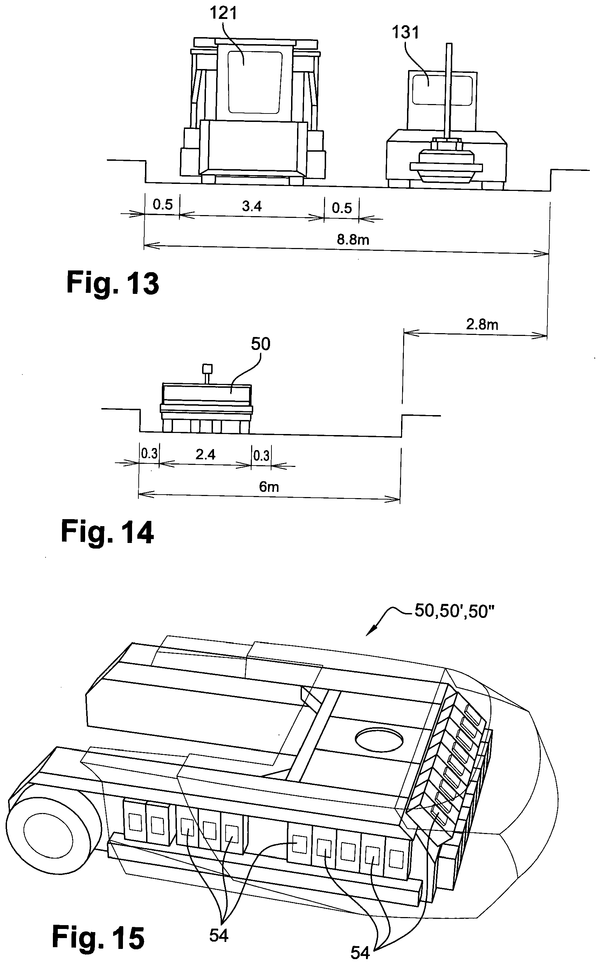

Les véhicules 50 de transport comprennent avantageusement un ou plusieurs moteurs 52 électriques et un ensemble de supercondensateurs 54 destiné à alimenter le ou les moteurs 52 électriques, visibles par transparence sur la figure 15.

Le système 1 de gestion comprend au moins une zone 16 de rechargement équipée de moyens de rechargement destinés à recharger l'ensemble de supercondensateurs 54 lorsque l'un des véhicules 50 de transport est situé dans la zone 16 de rechargement.

Les moyens de rechargement peuvent correspondre à des moyens de rechargement par induction. Ils peuvent en outre être enfouis sous la chaussée.

La ou les zones 16 de rechargement sont avantageusement agencées sur un itinéraire emprunté par les véhicules 50, 50', 50" de transport lorsqu'ils transportent un ensemble anodique ou un récipient de coulée selon le premier flux et/ou le deuxième flux et/ou le troisième flux et/ou le quatrième flux et/ou le cinquième flux.

Les véhicules 50 de transport sont avantageusement automatisés, et le système 1 de gestion comprend une unité 20 de supervision destinée à superviser le déplacement de chaque véhicule 50 de transport, en vue d'acheminer des ensembles anodiques et des récipients de coulée selon les premier, deuxième, et le cas échéant troisième, quatrième et cinquième flux.

Les véhicules 50 de transport comprennent par exemple des moyens de guidage automatique, destinés à permettre aux véhicules 50 de transport de se déplacer de façon autonome dans l'usine d'électrolyse.

En particulier, les moyens de guidage permettent à chaque véhicule 50 de transport de se géolocaliser, de calculer une trajectoire de référence et d'élaborer des commandes de pilotage.

Les moyens de guidage peuvent comprendre par exemple un système 60 SLAM (de l'anglais « Simultaneous Localisation And Mapping »). Ainsi, les moyens de guidage peuvent comprendre des télémètres lasers, des caméras, et une unité de mémorisation pouvant mémoriser une carte numérisée de l'usine d'électrolyse et/ou une cartographie des itinéraires sous forme de base de données.

Les véhicules 50 de transport peuvent embarquer des moyens de communication (non représentés) pour recevoir des ordres de mission et de déplacement de l'unité 20 de supervision et/ou, envoyer des informations sur la réalisation des missions, leur disponibilité et/ou leur positionnement en temps réel et/ou envoyer et/ou recevoir des mises à jour de la cartographie d'itinéraires et/ou de carte de l'usine d'électrolyse.

Les moyens de communication peuvent s'appuyer sur une technologie de réseau sans fil du type Wifi ou 3G.

Les véhicules 50 de transport peuvent comprendre des moyens de détection d'obstacle (non représentés), destinés à prévenir une collision avec un obstacle (humain ou matériel). Les moyens de détection d'obstacle comprennent par exemple des lasers de sécurité, des détecteurs capacitifs, ou des caméras.

Les véhicules 50 de transport peuvent notamment comprendre une platine 56 à LED (de l'anglais « Light Emitting Diode »), par exemple sensiblement semi-circulaire sur la périphérie extérieure avant du véhicule. Cette platine 50 à LED reflète la position d'un obstacle dans une zone de détection couverte par les moyens de détection d'obstacle. Cela permet l'activation d'une alarme visuelle informant d'une détection d'obstacle.

Les véhicules 50 de transport peuvent embarquer un système de pilotage (non représenté), destiné à recevoir des informations issues des moyens de guidage et à actionner les organes de manoeuvre du véhicule 50, en vue de son déplacement ou du levage d'une charge. Le système de pilotage s'appuie sur les informations fournies par les moyens de guidage pour générer des ordres de trajectoire à suivre en prenant en compte la cinématique du véhicule 50 ainsi que le type de charge et la masse de la charge transportée. Ainsi, à titre d'exemple, le système de pilotage peut parvenir à un effet anti-ballant par intégration du phénomène d'oscillation lors du transport de métal liquide.

Les véhicules 50 de transport peuvent comprendre des moyens de signalisation, comme des feux clignotants, un avertisseur 58 sonore et/ou lumineux, en vue de signaler leur approche et leur trajectoire aux personnes présentes alentour. Cela contribue à davantage de sécurité.

L'unité 20 de supervision est destinée à coordonner le fonctionnement des véhicules 50, 50', 50" de transport en fonction des besoins de l'usine d'électrolyse.

L'unité 20 de supervision peut intégrer un module 22 de gestion des missions, destiné à planifier et ordonnancer les missions des véhicules de transport à partir de données issues en temps réel de systèmes 24 connexes, par exemple usure d'une anode, durée et fréquence des cycles de coulée, stocks en matières premières, emplacements disponibles dans l'atelier de stockage, activités des ponts roulants en cours ou programmées (changement de l'anode de la cuve x, coulée métal de la cuve y). Les ordres de mission ainsi générés sont ensuite envoyés au véhicule 50, 50', 50" de transport le plus approprié, c'est-à-dire celui qui est par exemple le plus proche et le plus rapidement disponible compte-tenu de la mission à effectuer. Le module 22 de gestion des missions peut être complété par un module 21 d'interfaçage permettant à un opérateur d'interagir avec le module 22 de gestion.

Une interface Homme Machine peut par exemple être prévue pour renseigner les opérateurs présents en salle de contrôle sur l'état des différents équipements, leur emplacement et missions en cours, les prochaines maintenances, l'état des voies (disponible ou en travaux), les historiques d'activités sur un période déterminée.

L'unité 20 de supervision peut notamment comprendre un ordinateur et un programme d'ordinateur conçu pour la gestion de flux logistiques, destinés à générer des ordres de mission et de déplacements, et des moyens de télécommunication, destinés à transmettre ces ordres de missions et de déplacement aux véhicules de transport.

L'unité 20 de supervision peut également comprendre un module de calcul d'itinéraire (non représenté), destiné à déterminer un itinéraire à emprunter par les véhicules 50, 50', 50" de transport sur la base de données telles que l'état des voies de circulation et/ou les informations issues d'une station météorologique.

L'unité 20 de supervision peut comprendre des moyens de commande à distance (non représentés), connus de l'homme du métier, permettant à un utilisateur de prendre le contrôle de l'un des véhicules 50, 50', 50" de transport. Les véhicules 50, 50', 50" de transport comprennent des moyens de téléguidage (non représentés), connus de l'homme du métier, destinés à recevoir les signaux émis par les moyens de commande à distance pour permettre le pilotage à distance du véhicule 50, 50', 50" de transport.

Avantageusement, le système 1 de gestion comprend au moins une première zone 12 de circulation et au moins une deuxième zone 14 de circulation, dans lesquelles sont destinées à circuler les véhicules 50, 50', 50" de transport, et des moyens de limitation de la vitesse des véhicules de transport associés aux moyens de guidage pour limiter automatiquement à une première vitesse V1 prédéterminée la vitesse des véhicules de transport circulant dans la première 12 zone de circulation et à une deuxième vitesse V2 prédéterminée supérieure à la première vitesse V1 la vitesse des véhicules de transport circulant dans la deuxième zone 14 de circulation.

A titre purement illustratif, la première vitesse V1 peut être de l'ordre de 5 km/h et la deuxième vitesse V2 peut être de l'ordre de 25 à 30 km/h.

Avantageusement, la première 12 zone de circulation comprend une ou plusieurs zones parmi la zone 2 de stockage, la zone 4 de traitement, la zone 6 de production et le cas échéant la zone 8 de fonderie et/ou la zone 10 de fabrication, et la deuxième 14 zone de circulation est agencée en-dehors de la zone 2 de stockage, de la zone 4 de traitement, de la zone 6 de production et le cas échéant de la zone 8 de fonderie et/ou la zone 10 de fabrication.

Ainsi, les véhicules de transport circulent à vitesse basse à l'intérieur des bâtiments et dans des zones à risques concentrant par exemple du personnel et du matériel, et circulent à vitesse plus élevée à l'extérieur des bâtiments et des zones à risques.

Selon un autre aspect de l'invention, celle-ci concerne une aluminerie comprenant une pluralité de cuves d'électrolyse rectangulaires destinées à la production d'aluminium et un système 1 de gestion ayant les caractéristiques précitées, l'aluminerie comprenant en outre une ou plusieurs allées de travail, destinées à la circulation des véhicules 50, 50', 50" de transport à l'intérieur d'un ou plusieurs bâtiments de l'aluminerie dans lequel ou lesquels sont agencées les cuves d'électrolyse , et dans laquelle la ou les allées de travail ont une largeur inférieure ou égale au tiers, et de préférence au quart, de la longueur des cuves d'électrolyse.

Plus particulièrement, la longueur des cuves d'électrolyse d'une aluminerie selon un aspect de l'invention et dans laquelle circule un courant d'électrolyse de l'ordre de 600 k Ampères est par exemple de l'ordre de 18 m, pour une largeur de l'ordre de 4,5 m de l'allée de circulation.

L'aluminerie peut aussi comprendre, à l'extérieur du ou de ses bâtiments, une ou plusieurs voies de circulation, destinées à la circulation des véhicules 50, 50', 50" de transport à l'extérieur, cette ou ces voies de circulation extérieur présentant avantageusement une largeur inférieure ou égale à 6,5m, et de préférence inférieure ou égale à 6 m.

Les figures 13 et 14 représentent respectivement une voie de circulation extérieure d'une aluminerie classique selon l'art antérieur (figure 13) et une voie de circulation d'une aluminerie selon l'invention (figure 14). On se rend aisément compte de la différence de largeur, respectivement 8,8m pour la voie de l'aluminerie classique et 6m pour celle de l'aluminerie selon l'invention. La voie de l'aluminerie classique est en effet dimensionnée pour permettre le croisement de deux véhicules de transport traditionnels, tandis que la voie de l'aluminerie selon l'invention autorise le croisement de deux véhicules 50 de transport selon l'invention.

Selon un autre aspect de l'invention, celle-ci concerne un véhicule 50 de transport destiné à la mise en oeuvre du système 1 de gestion décrit ci-dessus. Le véhicule 50 de transport comprend des moyens de guidage automatique destinés à permettre son déplacement de façon autonome, comme ceux qui ont été précédemment décrits. Le véhicule 50 de transport est dimensionné pour ne pouvoir transporter qu'un seul ensemble anodique à la fois. Autrement dit, le véhicule 50 de transport ne peut pas transporter plus d'un ensemble anodique à la fois.

Le véhicule 50 de transport peut, selon un mode de réalisation de l'invention, comprendre des moyens de levage conçus pour soulever un unique ensemble anodique, et une pluralité de roues 62 supportant le véhicule et agencées pour former un polygone 64 à l'intérieur duquel s'étendent sensiblement les moyens de levage. Les moyens de levage peuvent par exemple comprendre une palette 66 de levage, destinée à supporter l'unique ensemble anodique. Les moyens de levage peuvent aussi comprendre une fourche, s'étendant à l'intérieur d'un U formé par le véhicule, et/ou plusieurs cornières 82 en L s'étendant à l'intérieur du U, le long des portions 74 latérales et/ou de la portion 72 centrale décrites ci-après. Les fourches et/ou les cornières sont destinés à supporter la palette. Les moyens de levage peuvent aussi comprendre des moyens de déplacement vertical des fourches et/ou des cornières. Ces moyens de déplacement comprennent par exemple un système de bielle/vérin.

Comme cela est visible sur la figure 7, le véhicule 50 peut comprendre un unique ensemble 3, 5 anodique supporté par les moyens de levage et la surface du polygone 64 formé par l'agencement des roues 62 est sensiblement comprise entre 0,5 fois et 1,5 fois une surface projetée dans un plan sensiblement horizontal de l'ensemble 3, 5 anodique.

Le véhicule peut aussi comprendre un unique ensemble 3, 5 anodique supporté par les moyens de levage et les moyens de levage présentent une surface globale de support sur laquelle est destinée à reposer l'unique ensemble 3, 5 anodique, la surface globale de support étant comprise entre 1 et 1,5 fois la surface projetée dans un plan sensiblement horizontal de l'ensemble 3, 5 anodique.

Le véhicule 50 peut comprendre un unique ensemble 3, 5 anodique supporté par les moyens de levage, et une surface projetée dans un plan sensiblement horizontal du véhicule 50 de transport est sensiblement égale ou inférieur au triple, et de préférence inférieur ou égale au double d'une surface projetée dans un plan sensiblement horizontal de l'unique ensemble anodique. Ainsi, la taille et l'encombrement du véhicule est minimum par rapport à la charge transportée.

Comme on peut le voir sur les figures 7 et 8, le véhicule 50 de transport peut comprendre un châssis 70 en forme de U présentant une portion 72 centrale et deux portions 74 latérales sensiblement parallèles entre lesquelles s'étendent les moyens de levage, et les roues 62 sont agencées sous chacune des portions 74 latérales et sous la portion 72 centrale. Le véhicule 50 mono-châssis peut donc se déplacer en charge et à vide.

L'une au moins des roues 62 du véhicule 50, par exemple la ou les roues 62 avant située sous la portion 72 centrale, est mobile par rapport au châssis 70 autour d'un axe de rotation sensiblement vertical, comme cela est illustré sur la figure 8. Ainsi, le véhicule de transport présente un faible rayon de braquage. Cela augmente son agilité, notamment pour effectuer des demi-tours quasiment sur place, comme illustré à la figure 9.

Le véhicule 50 de transport peut comprendre des moyens d'arrimage conçus pour solidariser au véhicule de transport une palette 76 autoportée dimensionnée pour supporter un unique récipient de coulée.

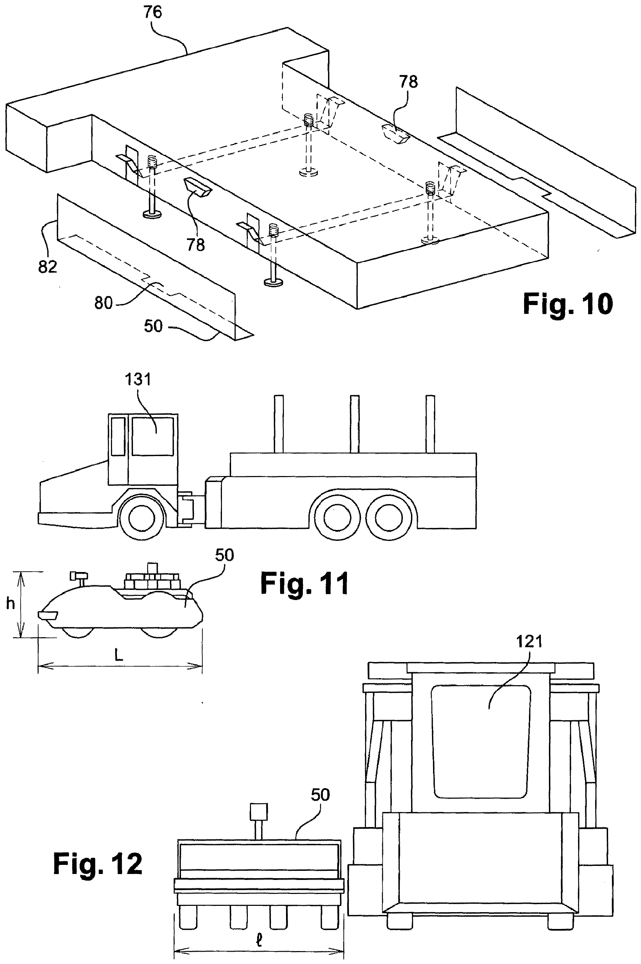

Comme illustré sur la figure 10, les moyens d'arrimage comprennent par exemple un ergot 78, notamment un ergot biseauté, faisant saillie depuis la palette 76 autoportée, et une encoche 80 ménagée dans le véhicule 50 de transport, plus précisément ménagée dans les moyens de levage, notamment dans une cornière 82 des moyens de levage destinée à supporter une palette de support d'un unique ensemble anodique, l'encoche 80 étant conformée pour recevoir l'ergot 78 lorsque la palette 76 autoportée est arrimée au véhicule 50 de transport.

Ainsi, les fonctions de support de la palette recevant l'ensemble anodique et celle d'arrimage de la palette autoportée supportant le récipient de coulée sont réalisées par l'intermédiaire d'un même organe mécanique, à savoir des cornières avec encoche, si bien que l'encombrement de l'espace de chargement du véhicule est limité, ce qui permet avantageusement de restreindre davantage les dimensions du véhicule 50 de transport.

Le véhicule de transport peut comprendre des moyens de blindage (non représentés) destinés à protéger l'électronique embarquée contre les effets d'un champ magnétique. Les moyens de blindage comprennent par exemple un carter métallique. Le carter métallique est destiné à envelopper tout élément du véhicule 50 de transport dont le fonctionnement risque d'être affecté par le champ magnétique ambiant généré notamment par la circulation d'un courant d'électrolyse de plusieurs centaines de milliers d'Ampères dans des cuves d'électrolyse.

Le véhicule 50 de transport peut bien entendu comprendre aussi tout ou partie des caractéristiques des véhicules de transport décrits ci-dessus en référence au système 1 de gestion.

En particulier, le véhicule 50 de transport peut comprendre un ou des moteurs 52 électriques et un ensemble 54 de supercondensateurs destiné à alimenter le moteur électrique. Par exemple, le véhicule 50 est propulsé par des moteurs-roues alimentés par des supercondensateurs qui sont destinés à être rechargés par induction lors d'une courte période d'arrêt dans une zone 16 de rechargement.

Aussi, le véhicule 50 de transport peut comprendre des moyens de téléguidage, destinés à commander le déplacement du véhicule sur la base de signaux émis par des moyens de commande à distance destinés à permettre à un opérateur de prendre le contrôle à distance du véhicule 50 de transport.

Selon le mode de réalisation des figures 11 et 12, le véhicule 50 présente une hauteur h maximale égale ou inférieure à 1200 mm, offrant ainsi une bonne visibilité pour le personnel à pied au-delà du véhicule, une largeur I maximale égale ou inférieure à 2500 mm, et une longueur L maximale égale ou inférieure à 3800 mm.

Le véhicule 50 de transport peut présenter une masse égale ou inférieure à cinq tonnes.

En particulier, la masse du véhicule de transport est inférieure ou égale à la masse de l'unique ensemble anodique qu'il transporte.

Cette masse et ces dimensions, sensiblement plus faibles que celle de véhicules de transport classiques représentés à titre de comparaison à la même échelle que le véhicule 50 de transport sur les figures 11 et 12, permettent notamment, comme cela a été évoqué précédemment, de réduire la taille et les coûts d'infrastructure, et d'améliorer la sécurité en apportant davantage de visibilité.

Selon encore un autre aspect, l'invention concerne un procédé d'implantation du système 1 de gestion décrit précédemment dans une usine d'électrolyse comprenant une première flotte de véhicules de transport, dimensionnés pour transporter simultanément une pluralité d'ensembles anodiques, le procédé comprenant une étape de remplacement de la première flotte de véhicules de transport par une seconde flotte de véhicules de transport, la seconde flotte de véhicules de transport comprenant au moins un véhicule 50 de transport dimensionné pour ne pouvoir transporter qu'un seul ensemble anodique à la fois.

Les véhicules 50 de transport de la seconde flotte peuvent présenter tout ou partie des caractéristiques décrites ci-dessus en référence aux véhicules 50 de transport destinés à la mise en oeuvre du système 1 de gestion selon l'invention.

Avantageusement, tous les véhicules de transport de la seconde flotte sont des véhicules de transport dimensionnés pour ne pouvoir transporter qu'un seul ensemble anodique à la fois.

Le procédé peut comprendre une étape de délimitation d'au moins une première zone 12 de circulation et d'au moins une deuxième zone 14 de circulation dans lesquelles sont destinés à circuler les véhicules 50 de transport de ladite seconde flotte de véhicules de transport, une étape de détermination d'une première vitesse V1 prédéterminée correspondant à la vitesse maximale de déplacement autorisée des véhicules 50 de transport de la seconde flotte dans la première zone de circulation, une étape de détermination d'une deuxième vitesse V2 prédéterminée supérieure à la première vitesse V1 et correspondant à la vitesse maximale de déplacement autorisée des véhicules 50 de transport de la seconde flotte dans la deuxième zone de circulation, et une étape de mise en place de moyens de limitation de la vitesse des véhicules 50 de transport destinés à limiter à la première vitesse V1 prédéterminée la vitesse des véhicules 50 de transport circulant dans la première zone 12 de circulation et à la deuxième vitesse V2 prédéterminée supérieure à la première vitesse V1 la vitesse des véhicules 50 de transport circulant dans la deuxième zone 14 de circulation.

Les première et deuxième vitesses V1 et V2 peuvent, comme décrit précédemment, être respectivement de l'ordre de 5 km/h et de l'ordre de 25 à 30 km/h.

Le procédé peut aussi comprendre une étape de séparation d'au moins une voie de circulation de l'usine d'électrolyse en au moins deux voies distinctes.

Le procédé peut bien entendu comprendre toute autre étape visant à implanter le système 1 précédemment décrit dans l'usine d'électrolyse préexistante, comme la mise en place d'une unité de supervision telle que décrite précédemment.

Le procédé peut également comprendre une étape de démontage des structures existantes et de remplacement de ces structures par des structures fonctionnellement similaires mais de dimensions inférieures aux structures démontées.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système (1) de gestion de flux logistiques d'une usine d'électrolyse comprenant:
- des ensembles (3) anodiques neufs et des ensembles (5) anodiques usés,
- une zone (2) de stockage, destinée au stockage des ensembles (3) anodiques neufs,
- une zone (4) de traitement, destinée au traitement des ensembles (5) anodiques usés,
- une zone (6) de production, comprenant une pluralité de cuves d'électrolyse destinées à la production de métal liquide par électrolyse, et
- une flotte de véhicules (50) de transport destinés au transport des ensembles (3) anodiques neufs de la zone (2) de stockage vers la zone (6) de production et des ensembles (5) anodiques usés de la zone (6) de production vers la zone (4) de traitement,
**caractérisé en ce que** les véhicules (50) de transport sont conçus pour pouvoir transporter uniquement un seul ensemble anodique (3, 5) à la fois.

2. Système (1) selon la revendication 1, **caractérisé en ce que** les véhicules (50) de transport comprennent un ou plusieurs moteurs (52) électriques et un ensemble de supercondensateurs (54) destiné à alimenter le ou les moteurs (52) électriques, et le système (1) de gestion comprend au moins une zone (16) de rechargement équipée de moyens de rechargement destinés à recharger l'ensemble de supercondensateurs (54) lorsque l'un des véhicules (50) de transport est situé dans la zone (16) de rechargement.

3. Système (1) selon la revendication 2, **caractérisé en ce que** ladite au moins une zone (16) de rechargement est agencée sur un itinéraire emprunté par les véhicules (50) de transport lorsqu'ils transportent un ensemble anodique de la zone (2) de stockage vers la zone (6) de production et/ou sur un itinéraire emprunté par les véhicules (50) de transport lorsqu'ils transportent un ensemble (3, 5) anodique de la zone (6) de production vers la zone (4) de traitement.

4. Système (1) selon l'une des revendications 1 à 3, **caractérisé en ce que** le système (1) de gestion comprend également une zone (8) de fonderie, destinée à la solidification du métal liquide, et une flotte de véhicules (50') de transport destinés à transporter des récipients (61) de coulée vides depuis la zone (8) de fonderie vers la zone (6) de production et des récipients (63) de coulée contenant un métal liquide depuis la zone (6) de production vers la zone (8) de fonderie, dans lequel les récipients (61) de coulée sont dimensionnés pour pouvoir contenir uniquement le métal liquide coulé d'une unique cuve d'électrolyse parmi les cuves d'électrolyse de la zone (6) de production lorsque le cycle de coulée présente une durée (d1) de l'ordre de trente heures, et dans lequel les véhicules (50) de transport sont dimensionnés pour pouvoir transporter uniquement un seul récipient (61, 63) de coulée à la fois.

5. Système (1) selon la revendication 4, **caractérisé en ce que** les véhicules (50) de transport destinés au transport d'un seul ensemble (3, 5) anodique à la fois et les véhicules (50') de transport destinés au transport d'un seul récipient (61, 63) de coulée à la fois sont sensiblement identiques, de sorte que les flottes de véhicules (50, 50') de transport se confondent en une seule et même flotte de véhicules (50) de transport.

6. Système (1) selon l'une des revendications 1 à 5, **caractérisé en ce que** les véhicules (50) de transport sont automatisés, et le système (1) de gestion comprend une unité (20) de supervision destinée à superviser le déplacement de chaque véhicule (50) de transport, en vue d'acheminer des ensembles (3) anodiques neufs de la zone (2) de stockage vers la zone (6) de production et des ensembles (5) anodiques usés de la zone (6) de production vers la zone (4) de traitement, et le cas échéant en vue d'acheminer des récipients (61) de coulée vides de la zone de fonderie vers la zone (6) de production et des récipients (63) de coulée contenant du métal liquide de la zone (6) de production vers la zone (8) de fonderie.

7. Système (1) selon l'une des revendications 1 à 6, **caractérisé en ce que** les véhicules (50) de transport comprennent des moyens de guidage automatique, destinés à permettre aux véhicules (50) de transport de se déplacer de façon autonome dans l'usine d'électrolyse.

8. Système (1) selon la revendication 7, **caractérisé en ce que** le système (1) de gestion comprend au moins une première zone (12) de circulation et au moins une deuxième zone (14) de circulation, dans lesquelles sont destinées à circuler les véhicules (50) de transport, et des moyens de limitation de la vitesse des véhicules (50) de transport associés aux moyens de guidage pour limiter automatiquement à une première vitesse (V1) prédéterminée la vitesse des véhicules (50) de transport circulant dans ladite au moins une première zone (12) de circulation et à une deuxième vitesse (V2) prédéterminée supérieure à la première vitesse (V1) la vitesse des véhicules (50) de transport circulant dans ladite au moins une deuxième zone (14) de circulation.

9. Système (1) selon l'une des revendications 1 à 8, dans lequel les véhicules (50) de transport de la flotte de véhicules (50) de transport comprennent des moyens de guidage automatique destinés à permettre leurs déplacements de façon autonome, lesdits véhicules (50) de transport étant dimensionnés pour pouvoir transporter uniquement un seul ensemble anodique à la fois.

10. Système (1) selon la revendication 9, **caractérisé en ce que** les véhicules (50) comprennent des moyens de levage conçus pour soulever un unique ensemble anodique, et une pluralité de roues (62) supportant les véhicules (50) et agencées pour former un polygone (64) à l'intérieur duquel s'étendent les moyens de levage.

11. Système (1) selon la revendication 10, **caractérisé en ce que** la surface du polygone (64) formé par l'agencement des roues (62) est sensiblement comprise entre 0,5 fois et 1,5 fois une surface projetée dans un plan sensiblement horizontal de l'ensemble anodique.

12. Système (1) selon la revendication 10 ou 11, **caractérisé en ce que** les moyens de levage présentent une surface globale de support, sur laquelle est destinée à reposer l'unique ensemble anodique, la surface globale de support étant comprise entre 1 et 1,5 fois la surface projetée dans un plan sensiblement horizontal de l'ensemble anodique.

13. Système (1) selon l'une des revendications 10 à 12, **caractérisé en ce qu'**une surface projetée dans un plan sensiblement horizontal du véhicule (50) de transport est sensiblement égale ou inférieur au triple, et de préférence égale ou inférieur au double d'une surface projetée dans un plan sensiblement horizontal de l'unique ensemble anodique.

14. Système (1) selon l'une des revendications 10 à 13, **caractérisé en ce que** les véhicules (50) de transport comprennent un châssis (70) en forme de U présentant une portion (72) centrale et deux portions (74) latérales sensiblement parallèles entre lesquelles s'étendent les moyens de levage, et les roues (62) sont agencées sous les portions (74) latérales et sous la portion (72) centrale.

15. Aluminerie comprenant une pluralité de cuves d'électrolyse rectangulaires destinées à la production d'aluminium et un système (1) selon l'une des revendications 1 à 14, l'aluminerie comprenant en outre un ou plusieurs bâtiments, le ou l'un des bâtiments contenant ladite pluralité de cuves d'électrolyse, et au moins une allée de travail, agencée à l'intérieur dudit bâtiment contenant ladite pluralité de cuves d'électrolyse, l'allée de travail étant destinée à la circulation des véhicules (50) de transport pour l'approvisionnement de ladite pluralité de cuves d'électrolyse en ensemble anodique neuf ou l'évacuation d'un ensemble anodique usé de ladite pluralité de cuves d'électrolyse, et dans laquelle ladite au moins une allée de travail présente une largeur inférieure ou égale au tiers, de préférence inférieure ou égale au quart, de la longueur desdites cuves d'électrolyse.

16. Procédé d'implantation d'un système (1) selon l'une des revendications 1 à 14 dans une usine d'électrolyse comprenant une première flotte de véhicules de transport, dimensionnés pour transporter simultanément une pluralité d'ensembles anodiques, le procédé comprenant une étape de remplacement de ladite première flotte de véhicules de transport par une seconde flotte de véhicules (50) de transport, ladite seconde flotte de véhicules (50) de transport comprenant au moins un véhicule (50) de transport dimensionné pour pouvoir transporter uniquement un seul ensemble anodique à la fois.

17. Procédé selon la revendication 16, **caractérisé en ce que** le procédé comprend une étape de délimitation d'au moins une première zone (12) de circulation et d'au moins une deuxième zone (14) de circulation dans lesquelles sont destinés à circuler les véhicules (50) de transport de ladite seconde flotte de véhicules (50) de transport, une étape de détermination d'une première vitesse (V1) prédéterminée correspondant à la vitesse maximale de déplacement autorisée des véhicules (50) de transport de la seconde flotte dans ladite au moins une première zone (12) de circulation, une étape de détermination d'une deuxième vitesse (V2) prédéterminée supérieure à la première vitesse (V1) et correspondant à la vitesse maximale de déplacement autorisée des véhicules (50) de transport de la seconde flotte dans ladite au moins une deuxième zone (14) de circulation, et une étape de mise en place de moyens de limitation de la vitesse des véhicules (50) de transport destinés à limiter à la première vitesse (V1) prédéterminée la vitesse des véhicules (50) de transport circulant dans ladite au moins une première zone (12) de circulation et à la deuxième vitesse (V2) prédéterminée supérieure à la première vitesse (V1) la vitesse des véhicules (50) de transport circulant dans ladite au moins une deuxième zone (14) de circulation.

## Patentansprüche

1. System (1) zur Verwaltung von Logistikflüssen in einer Elektrolyseanlage umfassend:
- neue Anodenanordnungen (3) und verbrauchte Anodenanordnungen (5),
- eine Lagerzone (2) zur Lagerung neuer Anodenanordnungen (3),
- eine Behandlungszone (4) zur Behandlung verbrauchter Anodenanordnungen (5),
- eine Produktionszone (6) mit einer Vielzahl von Elektrolysezellen zur Herstellung von Flüssigmetall durch Elektrolyse und
- eine Flotte von Transportfahrzeugen (50) zum Transport neuer Anodenanordnungen (3) von der Lagerzone (2) zur Produktionszone (6) und verbrauchter Anodenanordnungen (5) von der Produktionszone (6) zur Behandlungszone (4),
**dadurch gekennzeichnet, dass** die Transportfahrzeuge (50) so ausgestaltet sind, dass sie jeweils nur eine Anodenanordnung (3, 5) transportieren können.

2. System (1) nach Anspruch 1, **dadurch gekennzeichnet, dass** die Transportfahrzeuge (50) einen oder mehrere Elektromotoren (52) und eine Reihe von Superkondensatoren (54) zur Stromversorgung des oder der Elektromotoren (52) aufweisen, und das Verwaltungssystem (1) mindestens eine Aufladezone (16) mit Auflademitteln zum Aufladen der Reihe von Superkondensatoren (54) aufweist, wenn sich eines der Transportfahrzeuge (50) in der Aufladezone (16) befindet.

3. System (1) nach Anspruch 2, **dadurch gekennzeichnet, dass** die mindestens eine Aufladezone (16) auf einem von den Transportfahrzeugen (50) beim Transport einer Anodenanordnung von der Lagerzone (2) zur Produktionszone (6) benutzten Weg und/oder auf einem von den Transportfahrzeugen (50) beim Transport einer Anodenanordnung (3, 5) von der Produktionszone (6) zur Behandlungszone (4) benutzten Weg angeordnet ist.

4. System (1) nach einem der Ansprüche 1 bis 3, **dadurch gekennzeichnet, dass** das Verwaltungssystem (1) auch eine zum Verfestigen des Flüssigmetalls vorgesehene Gießereizone (8) und eine Flotte von Transportfahrzeugen (50') zum Transport von leeren Gießbehältern (61) aus der Gießereizone (8) in die Produktionszone (6) und von Flüssigmetall enthaltenden Gießbehältern (63) aus der Produktionszone (6) in die Gießereizone (8) umfasst, wobei die Gießbehälter (61) so dimensioniert sind, dass sie nur das abgegossene Flüssigmetall aus einer einzigen Elektrolysezelle der Elektrolysezellen der Produktionszone (6) enthalten können, wenn der Gießzyklus eine Dauer (d1) in der Größenordnung von 30 Stunden hat, und wobei die Transportfahrzeuge (50) so dimensioniert sind, dass sie jeweils nur einen Gießbehälter (61, 63) transportieren können.

5. System (1) nach Anspruch 4, **dadurch gekennzeichnet, dass** die Transportfahrzeuge (50) zum Transport jeweils einer Anodenanordnung (3, 5) und die Transportfahrzeuge (50') zum Transport jeweils eines Gießbehälters (61, 63) im Wesentlichen identisch sind, so dass die Flotten von Transportfahrzeugen (50, 50') zu einer einzigen Flotte von Transportfahrzeugen (50) verschmelzen.

6. System (1) nach einem der Ansprüche 1 bis 5, **dadurch gekennzeichnet, dass** die Transportfahrzeuge (50) automatisiert sind und das Verwaltungssystem (1) eine Überwachungseinheit (20) zur Überwachung der Bewegung jedes Transportfahrzeugs (50) umfasst, um neue Anodenanordnungen (3) von der Lagerzone (2) zur Produktionszone (6) und verbrauchte Anodenanordnungen (5) von der Produktionszone (6) zur Behandlungszone (4) zu befördern und gegebenenfalls leere Gießbehälter (61) von der Gießereizone zur Produktionszone (6) und Flüssigmetall enthaltende Gießbehälter (63) von der Produktionszone (6) zur Gießereizone (8) zu befördern.

7. System (1) nach einem der Ansprüche 1 bis 6, **dadurch gekennzeichnet, dass** die Transportfahrzeuge (50) automatische Führungsmittel aufweisen, mittels derer sich die Transportfahrzeuge (50) selbständig in der Elektrolyseanlage bewegen können.

8. System (1) nach Anspruch 7, **dadurch gekennzeichnet, dass** das Verwaltungssystem (1) mindestens eine erste Verkehrszone (12) und mindestens eine zweite Verkehrszone (14), in denen die Transportfahrzeuge (50) fahren dürfen, und den Führungsmitteln zugeordnete Mittel zur Begrenzung der Geschwindigkeit der Transportfahrzeuge (50) umfasst, um die Geschwindigkeit der in der mindestens einen ersten Verkehrszone (12) fahrenden Transportfahrzeuge (50) automatisch auf eine vorbestimmte erste Geschwindigkeit (V1) und die Geschwindigkeit der in der mindestens einen zweiten Verkehrszone (14) fahrenden Transportfahrzeuge (50) auf eine vorbestimmte zweite Geschwindigkeit (V2) zu begrenzen, die größer ist als die erste Geschwindigkeit (V1).

9. System (1) nach einem der Ansprüche 1 bis 8, wobei die Transportfahrzeuge (50) der Flotte von Transportfahrzeugen (50) automatische Führungsmittel umfassen, mittels derer sie sich selbständig bewegen können, wobei die Transportfahrzeuge (50) so dimensioniert sind, dass sie jeweils nur eine Anodenanordnung transportieren können.

10. System (1) nach Anspruch 9, **dadurch gekennzeichnet, dass** die Fahrzeuge (50) Hebemittel zum Heben einer einzelnen Anodenanordnung und eine Vielzahl von die die Fahrzeuge (50) tragenden Rädern (62) aufweisen, die so angeordnet sind, dass sie ein Polygon (64) bilden, in dessen Inneren sich die Hebemittel erstrecken.

11. System (1) nach Anspruch 10, **dadurch gekennzeichnet, dass** die Fläche des durch die Anordnung der Räder (62) gebildeten Polygons (64) im Wesentlichen das 0,5- bis 1,5-fache einer in einer im Wesentlichen horizontalen Ebene projizierten Fläche der Anodenanordnung beträgt.

12. System (1) nach Anspruch 10 oder 11, **dadurch gekennzeichnet, dass** die Hebemittel eine Gesamtstützfläche aufweisen, auf der sich eine einzelne Anodenanordnung abstützt, wobei die Gesamtstützfläche das 1- bis 1,5-fache der in einer im Wesentlichen horizontalen Ebene projizierten Fläche der Anodenanordnung beträgt.

13. System (1) nach einem der Ansprüche 10 bis 12, **dadurch gekennzeichnet, dass** eine in einer im Wesentlichen horizontalen Ebene projizierte Fläche des Transportfahrzeugs (50) im Wesentlichen höchstens dreimal und vorzugsweise höchstens zweimal größer ist als eine in einer im Wesentlichen horizontalen Ebene projizierte Fläche der einzelnen Anodenanordnung.

14. System (1) nach einem der Ansprüche 10 bis 13, **dadurch gekennzeichnet, dass** die Transportfahrzeuge (50) einen U-förmigen Rahmen (70) mit einem Mittelteil (72) und zwei im Wesentlichen parallelen Seitenteilen (74) aufweisen, zwischen denen sich die Hebemittel erstrecken, und die Räder (62) unter den Seitenteilen (74) und unter dem Mittelteil (72) angeordnet sind.

15. Aluminiumschmelzerei, welche eine Vielzahl von rechteckigen Elektrolysezellen zur Herstellung von Aluminium und ein System (1) nach einem der Ansprüche 1 bis 14 umfasst, wobei die Aluminiumschmelzerei außerdem ein oder mehrere Gebäude, wobei das oder eines der Gebäude die Vielzahl von Elektrolysezellen enthält, und mindestens einen Fahrweg umfasst, der innerhalb des die Vielzahl von Elektrolysezellen enthaltenden Gebäudes angeordnet ist, wobei der Fahrweg für den Verkehr der Transportfahrzeuge (50) zur Versorgung der Vielzahl von Elektrolysezellen mit einer neuen Anodenanordnung oder zum Abtransport einer verbrauchten Anodenanordnung aus der Vielzahl von Elektrolysezellen vorgesehen ist, und wobei der mindestens eine Fahrweg eine Breite von höchstens einem Drittel, vorzugsweise höchstens einem Viertel der Länge der Elektrolysezellen aufweist.

16. Verfahren zum Integrieren eines Systems (1) nach einem der Ansprüche 1 bis 14 in eine Elektrolyseanlage, die eine erste Flotte von Transportfahrzeugen umfasst, die so dimensioniert sind, dass sie gleichzeitig eine Vielzahl von Anodenanordnungen transportieren, wobei das Verfahren einen Schritt des Ersetzens der ersten Flotte von Transportfahrzeugen durch eine zweite Flotte von Transportfahrzeugen (50) umfasst, wobei die zweite Flotte von Transportfahrzeugen (50) mindestens ein Transportfahrzeug (50) umfasst, das so dimensioniert ist, dass es jeweils nur eine Anodenanordnung transportiert.

17. Verfahren nach Anspruch 16, **dadurch gekennzeichnet, dass** das Verfahren einen Schritt des Abgrenzens mindestens einer ersten Verkehrszone (12) und mindestens einer zweiten Verkehrszone (14), in denen die Transportfahrzeuge (50) der zweiten Flotte von Transportfahrzeugen (50) fahren sollen, einen Schritt des Bestimmens einer vorbestimmten ersten Geschwindigkeit (V1), die der maximal zulässigen Fahrgeschwindigkeit der Transportfahrzeuge (50) der zweiten Flotte in der mindestens einen ersten Verkehrszone (12) entspricht, einen Schritt des Bestimmens einer vorbestimmten zweiten Geschwindigkeit (V2), die größer ist als die erste Geschwindigkeit (V1) und die der maximal zulässigen Fahrgeschwindigkeit der Transportfahrzeuge (50) der zweiten Flotte in der mindestens einen zweiten Verkehrszone (14) entspricht, und einen Schritt des Einrichtens von Mitteln zur Begrenzung der Geschwindigkeit der Transportfahrzeuge (50) umfasst, die dazu bestimmt sind, die Geschwindigkeit der in der mindestens einen ersten Verkehrszone (12) fahrenden Transportfahrzeuge (50) auf die vorbestimmte erste Geschwindigkeit (V1) und die Geschwindigkeit der in der mindestens einen zweiten Verkehrszone (14) fahrenden Transportfahrzeuge (50) auf die vorbestimmte zweite Geschwindigkeit (V2), die größer als die erste Geschwindigkeit (V1) ist, zu begrenzen.

## Claims

1. System (1) for managing logistics flows in an electrolysis plant comprising:
- new anode assemblies (3) and worn anode assemblies (5),
- a storage area (2), for storing new anode assemblies (3),
- a processing area (4), for processing worn anode assemblies (5),
- a production area (6), comprising a plurality of electrolytic cells for the production of liquid metal by electrolysis, and
- a fleet of transport vehicles (50) for conveying new anode assemblies (3) from the storage area (2) to the production area (6) and worn anode assemblies (5) from the production area (6) to the processing area (4),
**characterized in that** the transport vehicles (50) are designed to be able to carry only one anode assembly (3, 5) at a time.

2. System (1) according to claim 1, **characterized in that** the transport vehicles (50) comprise one or more electric motors (52) and a set of supercapacitors (54) for powering the electric motor(s) (52), and the management system (1) includes at least one charging area (16) equipped with charging means to charge all of the supercapacitors (54) when a vehicle (50) is located in the charging area (16).

3. System (1) according to claim 2, **characterized in that** the at least one charging area (16) is placed on a route used by transport vehicles (50) when carrying an anode assembly from the storage area (2) to the production area (6) and / or on a route used by transport vehicles (50) when carrying an anode assembly (3, 5) from the production area (6) to the processing area (4).

4. System (1) according to any of claims 1 to 3, **characterized in that** the management system (1) further comprises a foundry area (8) for solidifying the liquid metal, and a fleet of transport vehicles (50') for conveying empty casting containers (61) from the foundry area (8) to the production area (6) and casting containers (63) containing liquid metal from the production area (6) to the foundry area (8), wherein the casting containers (61) are sized so as to be able to contain only the liquid metal cast in a single electrolytic cell out of the electrolytic cells of the production area (6) when the casting cycle has a length d1 of about thirty hours, and wherein the transport vehicles (50) are sized to be able to carry only one casting container (61, 63) at a time.

5. System (1) according to claim 4, **characterized in that** the transport vehicles (50) for conveying a single anode assembly (3, 5) at a time and transport vehicles (50') for conveying a single casting container (61, 63) at a time are substantially identical, so that the fleets of transport vehicles (50, 50') can be considered as a single fleet of transport vehicles (50).

6. System (1) according to any of claims 1 to 5, **characterized in that** the transport vehicles (50) are automated, and the management system (1) comprises a monitoring unit (20) to monitor the movement of each transport vehicle (50) with a view to conveying new anode assemblies (3) from the storage area (2) to the production area (6) and worn anode assemblies (5) from the production area (6) to the processing area (4), and, if appropriate, with a view to conveying empty casting containers (61) from the foundry area to the production area (6) and casting containers (63) containing liquid metal from the production area (6) to the foundry area (8).

7. System (1) according to any of claims 1 to 6, **characterized in that** the transport vehicles (50) include automatic guiding means, designed to enable transport vehicles (50) to move independently in the electrolysis plant.

8. System (1) according to claim 7, **characterized in that** the management system (1) comprises at least one first traffic area (12) and at least one second traffic area (14), in which the transport vehicles (50) are designed to run, and means for limiting the speed of the transport vehicles (50) associated with guiding means to automatically limit the speed of the transport vehicles (50) running in said at least one first traffic area (12) to a first predetermined speed (V1) and the speed of the transport vehicles (50) running in said at least one second traffic area (14) to a predetermined second speed V2 greater than the first speed V1.

9. System (1) according to any of claims 1 to 8, wherein the transport vehicles (50) of the fleet of transport vehicles (50) comprise automatic guiding means to allow it to move independently, said transport vehicles (50) being sized to carry only one anode assembly at a time.

10. System (1) according to claim 9 **characterized in that** the vehicles (50) comprise lifting means designed to lift a single anode assembly, and a plurality of wheels (62) supporting the vehicles (50) and arranged to form a polygon (64) within which the lifting means extend.

11. System (1) according to claim 10 **characterized in that** the surface of the polygon (64) formed by the arrangement of the wheels (62) is substantially between 0.5 and 1.5 times an area projected in a substantially horizontal plane of the anode assembly.

12. System (1) according to claim 10 or 11 **characterized in that** the lifting means have an overall support surface, on which the single anode assembly is designed to rest, the overall support surface being between 1 and 1.5 times the area projected in a substantially horizontal plane of the anode assembly.

13. System (1) according to any of claims 10 to 12 **characterized in that** an area projected in a substantially horizontal plane of the transport vehicle (50) is substantially less than or equal to triple, and preferably less than or equal to double the area projected in a substantially horizontal plane of the single anode assembly.

14. System (1) according to any of claims 10 to 13 **characterized in that** transport the vehicles (50) comprise a U-shaped frame (70) having a central portion (72) and two substantially parallel side portions (74) between which extend the lifting means, and the wheels (62) are arranged under the side portions (74) and under the central portion (72).

15. Aluminum smelter comprising a plurality of rectangular electrolytic cells for aluminum production and a system (1) according to any of claims 1 to 14, the aluminum smelter further comprising one or more buildings, the building(s) containing said plurality of electrolytic cells, and at least one working aisle arranged within said building containing said plurality of electrolytic cells, the working aisle being designed for transport vehicles (50) to supply said plurality of electrolytic cells with new anode assemblies or removing a worn anode assembly from said plurality of electrolytic cells, and wherein said at least one working aisle has a width less than or equal to one third, preferably less than or equal to a quarter of the length of said electrolytic cells.

16. Method for setting up the management system (1) according to any of claims 1 to 14 in an electrolysis plant comprising a first fleet of transport vehicles, sized for simultaneously transporting a plurality of anode assemblies, the method comprising a step of replacing said first fleet of transport vehicles by a second fleet of transport vehicles (50), the second fleet of transport vehicles (50) comprising at least one transport vehicle (50) sized to be able to carry only one anode assembly at a time.

17. Method according to claim 16 **characterized in that** the method comprises a step of marking out at least one first traffic area (12) and at least one second traffic area (14) in which the transport vehicles (50) of said second fleet of transport vehicles (50) are designed to run, a step of determining a first predetermined speed (V1) corresponding to the maximum permissible speed of the transport vehicles (50) of the second fleet in said at least one first traffic area (12), a step of determining a second predetermined speed (V2) greater than the first speed (V1) and corresponding to the maximum permitted speed of travel of the transport vehicles (50) of the second fleet in said at least one second traffic area (14), and a step of setting up means for limiting the speed of the transport vehicles (50) designed to limit the of speed of the transport vehicles (50) running in said at least one first traffic area to the first predetermined speed (V1), and the speed of transport vehicles (50) running in said at least one second traffic area (12) to the second predetermined speed (V2) greater than the first speed (V1).
